# EUROPEAN PATENT APPLICATION

(11) **EP 3 178 732 A1**
(43) Date of publication of application: **14.06.2017**
(21) Application number: 15000694.8
(22) Date of filing: 10.03.2015
(51) Int. Cl.: B62K 3/00, A61G 5/04, B62K 3/16, B62D 37/00

(54) **SELF-BALANCING WHEELCHAIR**

(30) Priority: 10.03.2014 NL 1040717
(71) Applicant: Sial B.V., 5152 RX Drunen (NL)
(72) Inventor: Brouwer, Emile, 5161 CB Sprang-Capelle (NL)
(74) Representative: Griebling, Onno

(57) **Abstract**

Described is a driven wheelchair (100, 200) comprising a set of wheels (110) and a frame (120), wherein the wheels (110) support the frame (120) such that in use, the frame (120) is tiltable, wherein the wheelchair (100, 200) is arranged to actively balance the frame (120), wherein a seat (130) is mounted on the frame (120), wherein the wheelchair (100, 200) is operable to be driven by unbalancing the frame (120) while sitting on the seat (130),
characterized by the seat (130) and the frame (120) being mutually movably connected, the seat (130) being displaceable with respect to the frame (120) along a substantially horizontally oriented path (190), wherein a spring (180) is provided in between the seat (130) and the frame (120) for counteracting a displacement of the seat (130) along said path (190) and for displacing the seat (130) back from a displaced position to a starting position.

## Description

The present invention relates to a self-balancing wheelchair. This is meant to comprise a driven wheelchair of the type comprising a set of wheels and a frame, wherein the wheels support the frame such that in use, the frame is tiltable, wherein the wheelchair is arranged to actively balance the frame, wherein a seat mounted on the frame, wherein the wheelchair is operable to be driven by unbalancing the frame while sitting on the seat.

Known self-balancing wheelchairs are generally based on technology that has been developed for a self-balancing vehicle that is arranged for carrying a person in a standing position. This two-wheeled vehicle, also known under the brand name "Segway", is commonly known. The operation of this vehicle is also known: with a person standing on the frame of the vehicle leaning forward or backward, so that a balance of the frame actively kept by the vehicle is disrupted and a tilting of the frame is realized, a drive of the vehicle is controlled for driving the wheels. Depending on the direction of leaning, the vehicle then rides forward or backward. When the vehicle is static, the user can keep the frame in an unbalanced state by keeping a certain neutral position for thus keeping the vehicle in place.

EP 2 606 867 A1 shows a self-balancing wheelchair wherein the seat is fixedly connected to the frame. Unbalancing the frame with this wheelchair takes place by the user leaning forward or backward, just like with the "Segway".

It has been found that unbalancing the frame of a self-balancing wheelchair by leaning is relatively tiring. This especially is a problem for people having a certain type of muscular disease, making one having to efficiently use his powers.

An objective of the invention is to provide a solution to the above problem. In particular, an objective of the invention is to provide a wheelchair of the self-balancing type, that is operable with relatively little effort.

The above objective is attained by a wheelchair of the self-balancing type, characterized by the seat and the frame being mutually movably connected, the seat being displaceable with respect to the frame along a substantially horizontally oriented path, wherein a spring is provided in between the seat and the frame for counteracting a displacement of the seat along said path and for displacing the seat back from a displaced position to a starting position.

The seat being displaceable along a substantially horizontally oriented path enables the frame of the wheelchair to be unbalanced by shifting the body with respect to the frame together with the seat. For that purpose, a user of the wheelchair can for instance pull himself up by a steering rod, or push himself away against such. Displacing the seat back can take place simply by giving in to a force that was built up in the spring during the forth-displacement from a certain starting position. It has been found that for many users, the movements thus necessary for operating the wheelchair take less effort than leaning such as that necessary with a wheelchair wherein the seat is fixedly connected to the frame. A wheelchair according to the invention thus is relatively easily operable.

The counteracting force of the spring may be adjustable. Then, for different users, a different force necessary for operating the wheelchair can be set.

The wheelchair may comprise a supporting structure supporting the seat on the frame, the supporting structure comprising at least one upright pivotably connected to each of the seat and the frame. Then, displacing the seat is enabled by the pivoting of the upright with respect to the seat and the frame.

The supporting structure may also comprise two mutually spaced uprights, that are each pivotably connected to each of the seat and the frame. Thus, the seat can keep a flat orientation during the displacement with respect to the frame.

For the comfort of a user, the seat may be spring- and/or damper-supported on the frame through at least one upright.

At least one of the uprights may itself be formed as a spring or a shock absorber.

The spring may connect an upright to the seat or the frame, for generating a spring force in the pivoting of that upright with respect to the seat and the frame, respectively.

An end of the spring connected to an upright may be slideable with respect to that upright for the purpose of setting the spring force of the spring.

The starting position of the seat with respect to the frame may be adjustable. Thus, for different users, a different starting position can be set.

Preferably, a control unit for controlling a drive of the wheels is arranged such, and the starting position of the seat is set or is adjustable such, that the wheels can be kept static when the seat is in the starting position. Thus, in an active state, the wheelchair can be static at a certain location also without a user. Furthermore, a user then can relatively easily take the right sitting position by positioning his weight as centrally as possible above the tilting axis of the frame.

Further advantageous embodiments of a wheelchair according to the invention are elaborated in the dependent claims.

The invention is described in more detail with reference to the drawings, in which different embodiments of a wheelchair according to the invention are schematically shown, wherein:
- Figure 1 shows a relatively simple first embodiment, wherein the seat is displaceable with respect to the frame against a certain spring force, wherein the spring force is adjustable, wherein for comfort, the seat is also vertically spring-supported;
- Figure 2 shows a second embodiment, that is adapted as compared to the first embodiment, such that a starting position of the seat with respect to the frame is adjustable.

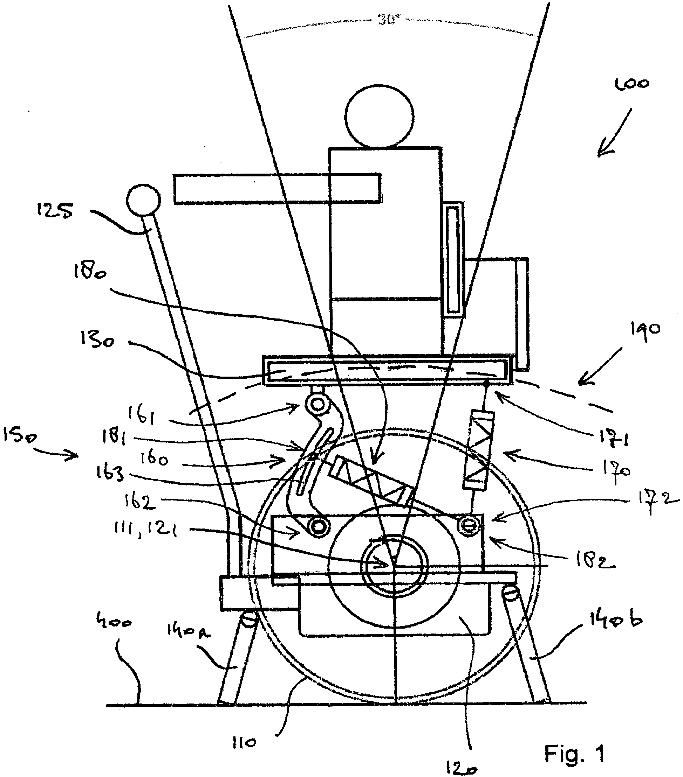

Figure 1 shows a wheelchair 100, comprising two wheels 110 and a frame 120. Due to the chosen view, only one of the two wheels 110 is visible in Figure 1. Figure 1 further shows a base floor 400.

The two wheels 110 are arranged on opposite sides of the frame 120, along a common rotation axis 111. The frame 120, resting on the base floor 400 through the wheels 120, thus in principle is tiltable about the common rotation axis 111. That rotation axis 111 thus forms also a tilting axis 121 for the frame 120.

Figure 1 shows the wheelchair 100 in a parked position, wherein extendable supports 140a, 140b, provided respectively at a front portion 122 and at a back portion 123 of the frame 120, are in an extended position. The supports 140a, 140b rest in that position on the base floor 400 on opposite sides of the tilting axis 121, and thus keep the frame 120 balanced.

A seat 130 is mounted on the frame 120, provided on a support structure 150 enabling a displacement of the seat 130 with respect to the frame 120. The support structure 150 is arranged such that in a displacement with respect to the frame 120, the seat 130 moves along a substantially horizontally oriented path 190, more in particular a path 190 that lies in a plane perpendicular to the tilting axis 121. In Figure 1, said path 190 is depicted as a dashed line.

In the shown example, the support structure 150 comprises a front upright 160 supporting the seat 130 at the front side, and a back upright 170 supporting the seat 130 at the back side. For that purpose, the two uprights 160, 170 are arranged spaced from each other on opposite sides of the tilting axis 121. Upper ends 161, 171 of the uprights 160, 170 thereby are each pivotably connected to the seat 130, and lower ends 162, 172 of the uprights 160, 170 are each pivotably connected to the frame 120. The various pivoting points each allow a rotation about an axis parallel to the tilting axis 121, whereby the support structure 150 as a whole can pivot such, that the seat 130 has a displacement degree of freedom in the front- and backward direction with respect to the frame 120.

A spring 180 is provided in between the seat 130 and the frame 120, arranged for delivering a force counteracting a displacement of the seat 130 with respect to the frame 120. The spring 180 has a first end 181 pivotably connected to the front upright 160 at a certain distance from the lower end 162 thereof, and a second end 182 pivotably connected to the frame 120. Thus, the spring 180 has the ability to move along in the pivoting of the support structure 150, and to exert a force on the first upright 160 during the pivoting, which force is dependent on the angular rotation of that upright 160 with respect to the frame 120.

The distance between the first end 181 of the spring 180 and the lower end 162 of the of the first upright 160 is adjustable. For that purpose, a slot 163 is provided in the first upright, along which the first end 181 of the spring 180 is slideable, wherein the first end 181 can be fixed at various positions. Thus, an arm can be set under which a force exerted by the spring 180 acts on the first upright 160, for thus varying an operation force that a user of the wheelchair 100 has to exert for displacing the seat 130 with respect to the frame 120.

The back upright 170 is formed as a shock absorber, for providing a user of the wheelchair 100 with a certain comfort.

The wheelchair 100 is arranged to actively keep the frame 120 within a certain balance, wherein a drive of the wheelchair 100 is operable by unbalancing the frame 120. Such combined balance and drive technology is known from existing self-balancing wheelchairs, as well as from other self-balancing vehicles, and therefore does not have to be explained in detail.

Essentially, for the wheelchair 100 described here, only the effect of the known technology is of importance: (i) the wheelchair 100 can itself keep the frame 120 in balance, for example by exerting a certain torque on the frame 120 through a drive (not shown), for reaching or keeping a certain orientation of that frame 120, wherein the orientation of the frame 120 possibly varies depending on the kept speed, and (ii) the wheelchair 100 can detect a user-caused imbalance with respect to a certain reference balance, for instance by measuring a deviation from an orientation of the frame 120 with respect to a certain reference orientation, and can control the drive depending on the detected imbalance for giving or letting the wheelchair 100 keep a certain speed. The result is known: by a forward displacement of the weight of a user, the wheelchair 100 can be operated to drive forward, and by a backward displacement of the weight of the user, the wheelchair 100 can be operated to drive backward.

Thereby, the functioning of the wheelchair 100 of Figure 1 is as follows.

A user sits himself on the seat 130, and, when necessary, activates the wheelchair 100, so that the frame 120 is automatically balanced. Next, whether or not automatically, the support 140a, 140b are retracted, so that the frame 120 is free to be tilted. When in this situation, a position of the seat 130 is set such, that the frame 120, despite the presence of the user on the seat 130, is in a balance corresponding with a balance defined by the control unit 130 of the wheelchair 100 that is associated with being static, the wheels 110 are not being driven, and the wheelchair 100 remains in place.

A user puts the wheelchair 100 in motion by pushing himself off against the frame 120, such that the frame 130 displaces with respect to the frame 120. The center of gravity of the assembly of the seat 130 and the user thereby shifts forward or backward, depending on the direction in which the user pushes himself off. As a result thereof, at a certain time, an imbalance with a corresponding tilt of the frame 120 is obtained, that is sufficient for setting the wheelchair 100 in motion. The wheelchair 100 then starts to ride in the desired direction.

During riding, the user can vary the degree in which he pushes himself off, to bring his body together with the 130 in a different position with respect to the frame 120, and thus, again by a shift of the center of gravity mentioned earlier, generate a different degree of imbalance and thereby obtain a different degree of tilting of the frame 120. Depending on how the control unit mentioned earlier is arranged, thus, the speed of the wheelchair 100 can be varied, or the wheelchair 100 can be brought to a hold.

For pushing himself off against the frame 120, a user can for instance engage a steering rod 120 that can be provided at the front of the wheelchair 100, as shown in Figure 1.

It is noted, that a wheelchair 100 as depicted in Figure 1 can be made in a relatively simple way by mounting a seat 130 and a support structure 150 on the frame of a base vehicle that by itself is already self-balancing. In such a case it can be important that the seat 130 and the support structure 150 are mounted such, that at least in the starting position of the seat 130 with respect to the frame 120, a common centre of gravity of the seat 130 and the support structure 150 lies above the tilting axis of the frame of the base vehicle. So, it can be prevented that already without the seat being displaced from a the starting position, an imbalance exists that is associated by the control unit of the base vehicle with a riding situation. Then, after all, in the activation, the wheelchair 100 could start riding immediately.

A problem associated with the problem described above concerns the fact that a wheelchair set to be used by one person, cannot necessarily also be used by another person. Differences in body build between different persons after all could cause the combined centre of gravity of the user and the seat to lie in a different position with different persons. Thereby, when the seat is in a certain starting position with respect to the frame, the frame could be in a balance for the one person, and in an imbalance for the other person. Also this could make the wheelchair to start riding without the seat having been brought out of the starting position.

For solving above mentioned problem, a support structure 150 supporting the seat 130 on the frame 120 may be adjustable to be able to set different starting positions for the seat 130 with respect to the frame 120. In the example shown, for that purpose, certain pivoting points of the support structure 150 may be displaceable for shifting a starting position of the seat 130 in forward or backward direction with respect to the frame 120. A displaceable pivoting point may for instance be the pivoting point of said second end 172 of the second upright 170, which pivoting point preferably is displaceable in combination with said second end 182 of the spring 180.

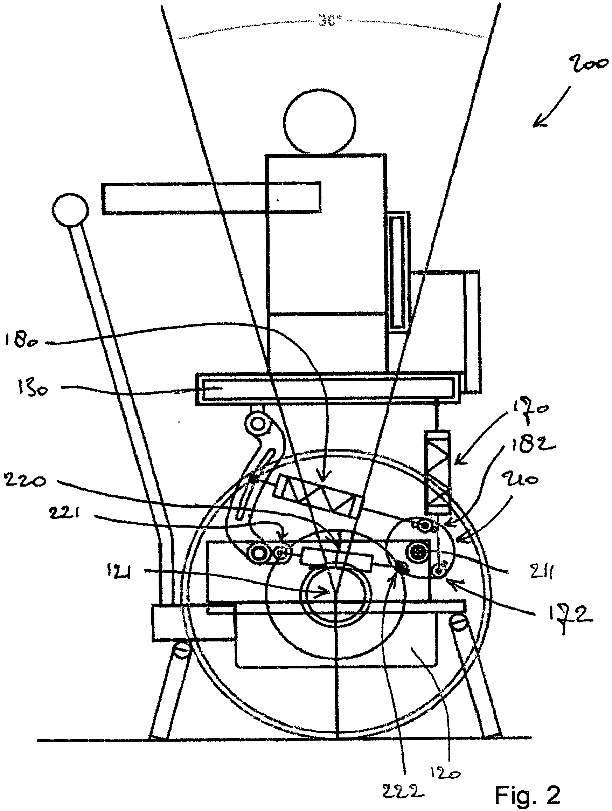

As depicted with the wheelchair 200 in the embodiment shown in Figure 2, a wheelchair according to the invention may also comprise a turning wheel 210 for setting the starting position of the seat 130.

As depicted, the turning wheel 210 may be mounted on the frame 200, the turning wheel 210 being rotateable about an axis parallel to the tilting axis 212 of the frame 120. The two ends 172, 182 mentioned earlier of the second upright 170 and the spring 180 may each be pivotably mounted on the turning wheel, wherein the turning wheel 210 is driveable by an actuator, for instance an extendable actuator 220 a first end 221 of which is pivotably connected to the frame 200, and a second end 222 of which is pivotably connected to the turning wheel 210.

When the actuator 220 for setting in motion the turning wheel 210 is operated, said connected two ends 172, 182 are displaced, as a result of which the second upright 170 and the spring 180 change position. Said two ends 172, 182 of the second upright 170 and the spring 180 can then be positioned such, that a motion of the turning wheel 210, or of another displaceable element said ends 172, 182 are connected with, tilts the starting position of the seat 130 with respect to the frame 120.

Preferably, the turning wheel 210 is operable in dependency of a change in orientation of the frame 120, to thus be able to correct for an automatic tilting of the frame 120, such as that occurring at certain speeds in existing self-balancing vehicles that could be used as a base vehicle for a self-balancing wheelchair. Such a functionality may be attained with a link between the actuator 220 that is arranged for setting in motion the turning wheel 210 and the control unit of the wheelchair 220.

According to a further aspect of the invention, that is not further elaborated in Figure 2, a height of the seat 130 with respect to the frame 120 may be adjustable for the purpose of adjusting the wheelchair 200 to different users. According to another further aspect, for the purpose of improved comfort, a shock absorber 170 may be provided not only at the back of the seat 130, but also at the front. According to yet another aspect, not only a spring 180 is provided in between the seat 130 and the frame 120, but also a damper, for damping a horizontal movement of the seat 130 with respect to the frame 120. In an advantageous embodiment, said spring 180 and damper are integrated in a single shock absorber.

It will be clear to a skilled person that the invention is not limited to the exemplary embodiments described in the above, but that various alternatives and modifications are possible within the scope of protection of the invention as defined in the appended claims.

## Claims

1. Driven wheelchair (100, 200) comprising a set of wheels (110) and a frame (120), wherein the wheels (110) support the frame (120) such that in use, the frame (120) is tiltable, wherein the wheelchair (100, 200) is arranged to actively balance the frame (120), wherein a seat (130) is mounted on the frame (120), wherein the wheelchair (100, 200) is operable to be driven by unbalancing the frame (120) while sitting on the seat (130),
**characterized by** the seat (130) and the frame (120) being mutually movably connected, the seat (130) being displaceable with respect to the frame (120) along a substantially horizontally oriented path (190), wherein a spring (180) is provided in between the seat (130) and the frame (120) for counteracting a displacement of the seat (130) along said path (190) and for displacing the seat (130) back from a displaced position to a starting position.

2. Wheelchair (100, 200) according to claim 1, wherein the counteracting force of the spring (180) is adjustable.

3. Wheelchair (100, 200) according to one of the preceding claims, further comprising a supporting structure (150) supporting the seat (130) on the frame (120), the supporting structure comprising at least one upright (160, 170) pivotably connected to each of the seat (130) and the frame (120).

4. Wheelchair (100, 200) according to claim 3, comprising two mutually spaced uprights (160, 170), that are each pivotably connected to each of the seat (130) and the frame (120).

5. Wheelchair (100, 200) according to claim 3 or 4, wherein the seat (130) is spring- and/or damper-supported on the frame (120) through at least one upright (160, 170).

6. Wheelchair (100, 200) according to claim 5, wherein at least one upright (170) itself is formed as a spring or a shock absorber.

7. Wheelchair (100, 200) according to one of claims 3 to 5, wherein the spring (180) connects an upright (160, 170) to the seat (130) or the frame (120), for generating a spring force in the pivoting of that upright with respect to the seat (130) and the frame (120), respectively.

8. Wheelchair (100, 200) according to one of claims 3 to 6, wherein an end (181) of the spring (180) connected to an upright (160) is slideable with respect to that upright (160) for the purpose of setting the spring force of the spring (180).

9. Wheelchair (100, 200) according to one of the preceding claims, wherein the starting position of the seat (130) with respect to the frame (120) is adjustable.

10. Wheelchair (100, 200) according to one of the preceding claims, wherein a control unit for controlling a drive of the wheels (120) is arranged such, and the starting position of the seat (130) is set or is adjustable such, that the wheels (120) can be kept static when the seat (130) is in the starting position.

11. Wheelchair (100, 200) according to one of claims 9 to 10, wherein a supporting structure (150) supporting the seat (130) on the frame (120) enables a forward or backward shift of the starting position.

12. Wheelchair (100, 200) according to one of claims 9 to 11, wherein a supporting structure (150) supporting the seat (130) on the frame (120) enables a forward or backward tilting of the starting position.

13. Wheelchair (100, 200) according to claim 12, wherein a control unit for controlling a drive of the wheels is arranged such, that in an automatic correction of the orientation of the frame (120) at a certain kept speed of the wheelchair (100, 200), the starting position of the seat (130) is automatically tilted to compensate for the automatic correction.

14. Wheelchair (100, 200) according to one of the preceding claims, wherein a height of the seat (130) with respect to the frame (120) is adjustable.

15. Wheelchair (100, 200) according to one of the preceding claims, wherein the wheelchair (100, 200) is arranged for damping a motion of the seat (130) with respect to the frame (120) along the horizontal path (190).
